Europäisches Patentamt

European Patent Office

Office européen des brevets

(11) Veröffentlichungsnummer: **0 279 255**
**A1**

## (12) EUROPÄISCHE PATENTANMELDUNG

(21) Anmeldenummer: 88101338.7

(22) Anmeldetag: 30.01.88

(51) Int. Cl.4: **A23G 1/10** , B01F 7/04 , B01F 15/06

(30) Priorität: 03.02.87 IT 1924387

(43) Veröffentlichungstag der Anmeldung:
24.08.88 Patentblatt 88/34

(84) Benannte Vertragsstaaten:
CH DE ES GB LI

(71) Anmelder: CARLE & MONTANARI S.p.A.
Via Neera 39
I-20144 Milano(IT)

(72) Erfinder: Bonora, Benito
Viale B. d'Este, 3/A
I-20122 Milano(IT)
Erfinder: Chiappa, Ottorino
Via Molise, 41
I-20052 Monza(IT)

(74) Vertreter: de Dominicis, Silvia Giovanna et al
de Dominicis & Partners s.a.s. Via Brera 6
I-20121 Milano(IT)

(54) Vorrichtung zur Herabsetzung der Viskositaet in Suspensionen von Feststoffen im fetten Traeger, wie Schokoladenmassen und dergleichen.

(57) Eine Vorrichtung zur Herabsetzung der Viskositaet in Suspensionen von Feststoffen im einem fetten Traeger, wie Schokoladenmassen, enthaltend einen mantelartigen Behaelter (2) mit im Inneren einer Anzahl von Kraenzen, die aus gleichmassig voneinander entfernten Schubspannung/Umruehrungselementen (7) bestehen, sowie einen Rotor (3), der ebenfalls mit einer Anzahl von Kraenzen versehen ist, die aus Schubspannung/Umruehrungselementen (6) bestehen, so dass einem Kranz von Elementen des mantelartigen Behaelters einen Kranz von Elementen des Rotors folgt usw. Ausserhalb des mantelartigen Behaelters (2) ist ein durch eine aeussere Umhuellung (4) gebildeter Zwischenraum (5) zur Heizung-Kuehlung-Thermostatisierung vorgesehen. An der Ausgangsseite der Vorrichtung ist ein Viskosimeter (10) zur Messung der tatsaechlichen Viskositaet vorgesehen. Auf diese Weise ist es moeglich, dem behandelten Produkt in gewissen Grenzen einen vorbestimmten genormten Viskositaetswert in Abhaengigkeit der nachfolgenden Behandlung zu verleihen.

Fig. 1

Die vorliegende Erfindung bezieht sich auf eine Vorrichtung zur Herabsetzung der Viskositaet in Suspension von Feststoffen in einem fetten Traeger, wie Schokoladenmassen und dergleichen. Obwohl im folgenden der Einfachheit halber auf Schokolade Bezug genommen wird, bezieht sich die vorliegende Erfindung ebenfalls auf ein aehnliches rheologisches Verhalten aufweisende Produkte, d. h. zum Beispiel auf Kakaoteige und kreme.

Im Herstellungsprozess von Schokoladenerzeugnissen, wie z. B. Pralinen, Schokoladentafeln usw. sind verschiedene Bearbeitungsstufen vorgesehen, bei welchen die Schokoladenmasse vorzugsweise bestimmte Viskositaetswerte aufweisen muss, damit das Enderzeugnis die gewuenschten organolektischen Merkmale und Geschmacksmerkmale aufweist.

Die Schokoladenmassen bestehen bekanntlich aus einer Suspension von Feststoffen (Kakaoteilchen, Zucker) in einem Fett (Kakaobutter, Lezithin) und stellen daher nicht-newtonische Fluessigkeiten dar, die der Gleichung von Casson:

$$\sqrt{D} = \frac{1}{\eta_{CA}} \left( \sqrt{\tau} - \sqrt{\tau_{CA}} \right)$$

entsprechen, in der bedeuten:

D = Geschwindigkeitsgradient;

$\tau$ = Schnittkraft;

$\eta_{CA}$ = plastische Viskositaet von Casson und

$\tau_{CA}$ = Gleitungsgrenze von Casson,

wie im Blatt 10/1970 vom Bureau of the Technical Committee of the O.I.C.C., Verlag Max Glaettli, P.O. Box 6934, Bioggio / Schweiz, angefuehrt ist.

Die Schokoladenmassen weisen deshalb ein rheologisches Verhalten und eine Viskositaet auf, das/die von den nachfolgenden Parametern abhaengig sind: Temperatur; Prozent der fetten Grundstoffe und granulometrische Verteilung; Feuchtigkeitsprozent; Lezithin prozent.

Diese Parameter werden deshalb nachfolgend in ihren spezifischen Aspekten kurz erlaeutert.

Was die Temperatur anbelangt, ist zu praezisieren, dass eine Erhoehung derselben eine Herabsetzung der Viskositaet verursacht, und zwar in der Groessenordnung von ca. 3-5 % fuer jeden °C. Die tatsaechliche Aenderung der Viskositaet wird jedoch vom Schokoladenteig, von der Schokoladenzusammensetzung, von der Granulometrie und von den Abmessungen der Feststoffe usw. abhaengig sein. Die Temperatur ist insbesondere fuer die Transportphasen der Schokolade wichtig. In bezug auf den fetten Grundstoff ist zu bemerken, das die Schokoladenfliessfaehigkeit um so groesser ist, desto groesser die Menge des vorgesehenen Fettes ist, und zwar nicht in Abhaengigkeit des gesamten Fettinhaltes, sondern in Abhaengigkeit des freien Fettes. Es ist an sich bekannte, dass ein Teil des Fettes der Schokoladenzusammensetzung der Schmierung der Teilchenoberflaeche dient, wogegen ein anderer Fetteil, das sogenannte freie Fett den eigentlichen "Traeger" bildet, innerhalb welchem die Feststoffteilchen sich bewegen. Daraus folgt, dass die Menge des freien Fettes ebensowenig sein wird, je groesser die zur Schmierung der Teilchen erforderliche Fettmenge sein wird, was an sich direkt mit der Granulometrie der Feststoffteilchen gebunden ist. In der Tat, je feiner die Feststoffteilchen sind, desto mehr nimmt die Anzahl derselben fuer ein gegebenens Gewicht zu, wodurch die spezifische Oberflaeche groesser sein wird, die in $m^2$, die von einem Gramm vom Produkt entwickelte Oberflaeche darstellt. Es ist festgestellt worden, dass waehrend einer starken Herabsetzung der Granulometrie von 100 auf 50 $\mu$m lediglich eine leichte Zunahme der spezifischen Oberflaeche bestimmt, bringt eine Herabsetzung von 30 auf 10 $\mu$m zu einer hybrerbolischen Zunahme der spezifischen Oberflaeche mit sich. Daraus folgt deshalb, dass bei gleicher Fettmenge die Viskositaet mit der Verminderung der Granulometrie zunimmt.

Der Schokoladenhersteller wird deshalb in der Praxis in der Lage sein, auf die Viskositaet der behandelten Schokoladenmasse einzuwirken, und zwar entweder bei Veraenderung der Zutaten der Ausgangsformel der Schokolade in dem Sinne, die Menge der Kakaobutter zu erhoehen oder beim Eingreifen auf die Schokoladenwalzenreibmaschine in dem Sinne, den Feinheitswert der Feststoffteilchen zu veraendern. Beim Zunehmen des Prozentsatzes der subfeinen Teilchen (< 10 $\mu$m) wird gleichzeitig eine unerwuenschte hyperbolische Zunahme der erwaehnten spezifischen Produktoberflaeche herbeigefuehrt. Es ist ferner zu bemerken, dass solche subfeinen Teilchen nicht einmal von Gaumen wahrgenommen werden, der normalerweise lediglich in der Lage ist, Teilchen mit Abmessungen in der Groessenordnung von ca. 25-35 $\mu$m wahrzunehmen.

Was die Feuchtigkeit anbelangt, ist es bekannt, dass eine Feuchtigkeitszunahme eine Zunahme der Viskositaet mit sich bringt. Es ist jedoch zu beruecksichtigen, das die Feuchtigkeit, d. h. das Wasser, das Fett zurueckdraengt und dabei die regelmaessige Schmierung der Teilchen verhindert, die deshalb eine groessere Gleitschwierigkeit haben. Der Feuchtigkeitswert wird hauptsaechlich in der Conchierstufe geregelt.

In bezug auf das Lezithin ist es bekannt, dass dasselbe die Bindung zwischen Wasser und Fett, d. h. zwischen zwei Elementen, die sich von Natur aus abstossen, ermoeglicht. Die verwendbaren Lezithinmengen sind jedoch Einschraenkungen ausgesetzt.

Die oben erwaehnten Parameter koennen innerhalb von gewissen Grenzen ohne weiteres geaendert werden, wobei einer Aenderung eines Parameters Anderungen der anderen in Betracht gezogenen Parameter, sowie manchmal praktischen Nachteile zwangslaeufig entsprechend.

Eine unpassende Zunahme der Temperatur kann die organolektischen Merkmale des fertigen Produkts beeintraechtigen, sowie eine Zunahme des Fettinhaltes wird deshalb zu oekonomischen Nachteilen deshalb fuehren, weil das Fett den teuersten Bestandteil der Schokolade darstellt.

Die Granulometrie kann innerhalb von ziemlich breiten Grenzen beeinflusst werden, wobei dieselbe auf jeden Fall die Bildung von feinsten Teilchen (< von 10 µm) mit sich bringt, deren Menge andererseits aus den oben angefuehrten Gruenden eingeschraenkt werden sollte. Was die Feuchtigkeit selbst anbelangt, kann dieselbe nicht ueber eine gewisse Grenze deshalb herabgesetzt werden, weil sonst waehrend der Conchierstufe ein Teil der der Schokolade eigenen aromatischen Fraktion verlorengehen koennte, was eine starke Verminderung der Qualitaet des Enderzeugnisses verursacht. Das Lezithin soll ferner sowohl aus technischen Umstaenden als auch aus ausdruecklich vorgesehenen gesetzgebenden Grenzen eingeschraenkt werden.

Aus den oben kurz angefuehrten Argumenten ist es deutlich ersichtlich, dass die Viskositaetsaenderung in Schokoladenmassen zur Zeit auf eine empirische Weise durchfuehrbar und das Ergebnis ziemlich unsicher ist. Es ist ferner zu beruecksichtigen, dass die Viskositaetsmerkmale ebenfalls je nach der Conchierzeit variieren, obwohl man von der gleichen Schokoladenformel ausgeht und eine und die gleiche Anlage verwendet.

Vorliegender Erfindung liegt die Aufgabe zugrunde, eine Vorrichtung zu schaffen, die in der Lage ist, auf eine mechanische Weise eine Heerabsetzung der Viskositaet einer Schokoladenmasse durchzufuehren, und zwar auf eine kontinuierliche Weise, in kurzen Zeiten, mit hohen Wirkungsgraden und mit der Bildung von haltbaren strukturellen Modifizierungen der behandelten Schokoladenmasse.

Es liegt im Rahmen der oben angegebenen Aufgabe, eine Vorrichtung zu schaffen, der vorteilhafterweise auf die Ausgangsseite ein Viskosimeter zur Messung des erzielten tatsaechlichen Viskositaetswertes zugeordnet ist, so dass eine Einheit geschaffen wird, die faehig ist, eine Schokoladenbehandlung mit "Normierung" bzw. Angabe der Viskositaetswerte zu ermoeglichen, die je nach der Behandlungsstufe der die zu behandelnden Schokoladenmasse nachfolgend zu unterziehen ist, erforderlich sind. Auf diese Weise erzielt man die Erhaltung der gewuenschten organolekti schen Merkmale des fertigen Erzeugnisses, und diese auf eine genau wiederholbare Weise, wofuer die qualtitative Gleichmaessigkeit der fertigen Schokoladenerzeugnisse gewaehrleistet ist.

Die erfindungsgemaesse Vorrichtung soll ferner eine einfache Bauart sowie eine zuverlaessige Arbeitsweise aufweisen, wodurch die genannte Vorrichtung in Anlagen zur Herstellung von Schokoladenerzeugnissen in Reihe eingeschaltet werden kann, und diese vorteilhafterweise sowohl in neuen als auch in schon bestehenden Anlagen, wobei im letzten Fall ohne besondere Anpassungsbearbeitungen durchzufuehren.

Die oben erwahnte Aufgabe wird nach der Lehre vorliegender Erfindung mit einer Vorrichtung geloest, die die Merkmale vom kennzeichnenden Teil des Anspruchs 1 aufweist.

Weiterbildungen und Ausfuehrungsformen der erfindungsgemaessen Vorrichtung sind den Merkmalen entnehmbar, die in den kennzeichnenden Teilen der Unteransprueche angegeben sind.

Mit der vorgeschlagenen Vorrichtung werden verschiendene Vorteile erzielt. Vor allem wird der behandelten Schokoladenmasse eine richtige Menge mechanischer Energie verliehen, die deshalb der behandelten Masse eine Energie uebermittelt, die kleiner ist als die Bruchbelastungen der die feste Fraktion der Schokoladenmasse bildenden Feststoffteilchen, wodurch eine weitere Reibwalzphase der Schokoladenmasse mit Sicherheit vermieden wird, die im Einleitungsteil angegebenen Nachteile ausgeschaltet werden und eine wesentliche Verbesserung der logischen Merkmale der behandelten Masse erzielt wierd. Die Regelung der vorgeschlagenen Vorrichtung ist auf eine sehr einfache Weise dadurch durchfuehrbar, dass auf die Geschwindigkeit des Rotors und auf die Behandlungszeit eingewirkt wird, wodurch es moeglich wird, auf eine einfache Weise den jeweils gewuenschten Viskositaetswert je nach der nachfolgenden Behandlungsstufe der Schokoladenmasse, z. B. der Conchierung, der Temperierung usw. Der erzielte Viskositaetswert ist direkt am Ausgang der vorgeschlagenen Vorrichtung lesbar, wodurch derselbe auch auf eine

3

aeusserst einfach Weise zur Automatisierung der gesamten Herstellungsanla ge deshalb geeignet ist, weil der am Ausgang der vorgeschlagenen Vorrichtung gemessene Viskositaetswert ueber uebliche Apparaturen als Parameter zur Regelung der Anlageteile dienen kann, die der erfindungsgmaessen Vorrichtung nachgeordnet sind.

Noch ein Vorteil der erfindungsgemaessen Vorrichtung ist darin zu sehen, dass die Herabsetzung des Viskositaetswertes durch eine einfache und passende Uebertragung mechanischer Energie an die behandelte Schokoladenmasse, d. h. ohne auf die Mengen der Zutaten der Ausgangsformel einzugreifen, erzielbar ist, wodurch solche Viskositaetsherabsetzung ohne Aenderung der Ausgangsformel und unabhaengig von den nationalen Normen bezueglich der Menge des verwendbaren Lezithins erreichbar ist.

Die erreichten strukturellen Modifizierungen sind nicht umkehrbar, d. h. auf Tyssotropieerscheinungen zurueckzufuehren, sondern diese Modifizierungen sind stabil und bleiben bis zum Ende der Behandlung im vorgesehenen Herstellungsprozess unveraendert.

Diese strukturellen stabilen Modifizierungen sind in der Tat auf Zerfaserungen der molekularen Anhaeufungen und der Zutatenteilchen zurueckzufuehren, welchletztere durch Kraefte schwacher und/oder elektrostatischer Natur (im wesentlichen Kraefte von Van der Waals oder Dipolbindungen) gebunden sind, wodurch solche Modifizierungen physikalisch/chemischer Natur vorteilhafterweise fuer die ganze Zeit des normalen Herstellungsprozesses stabilbleiben.

Noch ein weiterer Vorteil ist in der einfachen Bauart der Vorrichtung zu sehen, die es ermoeglicht, die Menge der an die behandelte Masse uebertragenen mechanischen Energie auf eine einfache und zuverlaessige Weise zu regeln, so dass die Bildung von sub-feinen Feststoffteilchen mit Sicherheit vermieden wird und gleichzeitig besonders hohe Behandlungswirkungsgrade erzielt werden.

Ein weiterer Vorteil der vorgeschlagenen Vorrichtung besteht darin, dass dieselbe eine baukastenartige Ausfuehrung ermoeglicht, wodurch Mehrfachvorrichtungen auf eine einfache Weise herstellbar sind, die je nach den Erfordernissen und der Verwendung des in Betracht gezogenen Falles untereinander verbindbar sind. Die Tatsache, dass man auf eine kontinuierliche Weise arbeitet, ermoeglicht es der vorgeschlagenen Vorrichtung, die Leistung der Anlage zur Herstellung von Schokoladenerzeugnissen nicht herabzusetzen bzw. diskontinuierlich zu gestalten. Dadurch, dass der Viskositaetsherabsetzungsgrad von der uebertragenen Energie sowie von der Behandlungszeit abhaengt, nach der Wahl der passenden zu uebertragenden Energie kann die Durchgangszeit der Schokoladenmasse durch die Vorrichtung hindurch einfach durch die Aenderung der Foerderleistung einer Speisepumpe zur Speisung des Schokoladenteigs in die vorgeschlagene Vorrichtung geregelt werden.

Weitere Merkmale, Einzelheiten und Vorteile der erfindungsgemaessen Vorrichtung sind der nachfolgenden Beschreibung entnehmbar unter Bezugnahme auf die beigefuegte Zeichnung.

Es zeigen schematisch:

Fig. 1 einen prinzipiellen mittleren Laengsschnitt entlang einer erfindungsgemaessen Vorrichtung;

Fig. 2 einen Querschnitt gemaess der Schnittlinie II-II von Fig. 1 in groesserem Massstab; und

Fig. 3 ein prinzipielles Schaltbild zur Darstellung der Einfuehrung der erfindungsgemassen Vorrichtung in einer Herstellungslinie zur Herstellung von Schokoladenerzeugnissen.

Unter Bezugnahme auf die oben angefuehrten Figuren, bei welchen gleiche Teile gleiche Bezugszeichen aufweisen, wird die erfindungsgemaesse Vorrichtung zur Herabsetzung der Viskositaet von Schokoladenmassen insgesamt mit 1 bezeichnet. Diese Vorrichtung besteht aus einem mantelartigen aeusseren Behaelter 2, der einen Rotor 3 aufnimmt. Mit 4 ist eine aeussere Umhuellung bezeichnet, die mit dem mantelartigen Behaelter 2 einen Zwischenraum 5 zur Fuehrung einer Heizungsfluessigkeit bildet. Auf dem Rotor 3 ist eine Anzahl von drehbaren Schubspannung/Umruehrungselementen angeordnet, die im dargestellten Beispiel gemaess einer Anzahl von jeweils zwei diametral entgegengesetzten Elementen 6 verteilt sind. Jedes Paar bzw. jeder Kranz von diametral entgegengesetzten Elementen 6 ist vom benachbarten aus zwei Elementen 6 bestehenden Paar bzw. Kranz mit einer gleichbleibenden Teilung T entfernt. Deise Teilung koennte auch veraenderlich sein. Mit 7 sind am mantelartigen Behaelter 2 befestigte Elemente bezeichnet, wobei im dargestellten Beispiel jeweils vier voneinander regelmaessig um 90° versetzte Elemente vorgesehen sind, die jeweils einen zwischen zwei benachbarten Paaren von Elementen 6 des Rotors liegenden Kranz bilden. Die zwischen zwei aus Elementen 7 bestehenden benachbarten Kraenzen des mantelartigen Behaelters 2 vorgesehene Teilung T ist selbstverstaendlich gleich der Teilung T, die zwischen zwei aus zwei Elementen 6 bestehenden benachbarten Paaren bzw. Kraenzen des Rotors 3 vorgesehen ist. Mit 8 ist der Einlaufstutzen und mit 9 der Auslaufstutzen der Vorrichtung 1 bzw. der Schokolade bezeichnet. Dem Auslaufstutzen 9 ist ein schematisch dargestelltes Viskosimeter 10 zugeordnet, das an und fuer sich jede beliebige Bauart aufweisen kann und dazu dient, den tatsaechlichen Wert bzw. Istwert der Viskositaet der jeweils behandelten Schokoladenmasse anzugeben. Mit 11 und 12 ist jeweils der Einlaufstutzen und der Auslaufstutzen fuer die durch den Zwischenraum 5 gefuehrte Heizungsfluessigkeit bezeichnet.

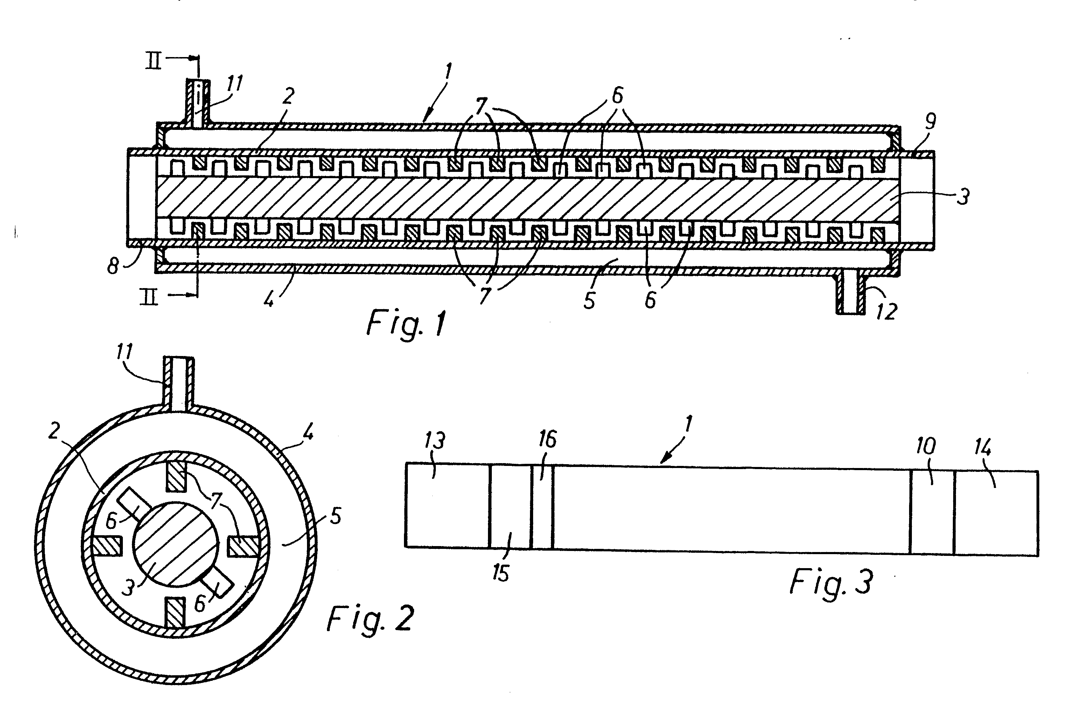

Die vorgeschlagene Vorrichtung ist fuer die Hintereinanderschaltung in einer Anlage zur Herstellung von Schokoladenerzeugnissen bzw. zur Anordnung vor einer bestimmten Bearbeitungsstufe der Schokoladenmassenbearbeitung, z. B. in Fig. 3 dargestellt, vorgesehen. In der dargestellten Anordnung ist die Vorrichtung zur Herabsetzung der Viskositaet zwischen einer vorgeordneten Conchierstufe 13 und einer nachgeordneten Temperierungsstufe 14 angeordnet, wobei mit 15 eine Umlaufpumpe fuer die Schokoladenmasse zur Gewaehrleistung einer gleichmaessigen Arbeitsweise bezeichnet ist.

Waehrend der Arbeitsweise der Vorrichtung 1 wird der Rotor 3 z. B. mittels einer Motorgetriebes 13 in Drehung versetzt, wofuer eine Relativbewegung zwischen den aus den am Rotor 3 befestigten Elementen 6 bestehenden Kraenzen und den aus den am mantelarti gen Behaelter 2 befestigten Elementen 7 bestehenden Kraenzen entsteht. Die durch den Einlaufstutzen 8 eingefuehrte Schokoladenmasse, und zwar vorzugsweise ueber die Pumpe 15 zur Regelung des Durchsatzes, wird die ganze Laenge der Vorrichtung 1 durchlaufen, und zwar durch die Zwichenraeume hindurch, die zwischen den einzelnen aus den Elementen 6 bzw. 7 bestehenden Kraenzen gebildet sind, um dann ueber den Auslaufstutzen 9 die Vorrichtung 1 zur verlassen und, im dargestellten Beispiel, nach Durchlauf des Viskosimeters 10 zur Ermittlung des Viskositaetswertes in die Temperierungsstufe 14 eingefuehrt zu werden. Beim Laengsdurchlauf der Vorrichtung 1 wird der Schokoladenmasse eine gewisse Menge mechanischer Energie verliehen, deren Wert, der von der Drehungsgeschwindigkeit der Rotors 3 abhaengt, derart gewaehlt wird, dass die Bruchbelastungen der einzelnen Feststoffteilchen der Schokoladenmasse nicht ueberwunden und somit die Bildung von sub-feinen Teilchen mit Sicherheit vermieden wird.

Mit der Wirkung der Uebertragung von mechanischer Energie durch innige Mischung der Schokoladenmasse wird eine Zerfasrung der molekularen Anhaeufungen und die Zerbrechung der Bindungen verursacht, die von den Kraeften schwacher und/oder elektrostatischer Natur, das heisst im wesentlichen von den Kraeften Van der Waals oder Dipol-Bindungen entstehen, wodurch die gewonnenen Modifizierungen eine stabile und gleichbleibende Natur fuer die ganze Dauer des in Betracht gezogenen Herstellungsprozesses aufweisen.

Bei der Durchfuehrung von Versuchen auf vier verschiedenen Schokoladenmassen unter Einsetzung einer erfindungsgemassen Versuchsvorrichtung mit der nachfolgenden Bemessung

Rotorlaenge = 580 mm

Rotordurchmesser = 36 mm

Innendurchmesser des mantelartigen Behaelters: 66 mm

Elemente 6, 7 des mantelartigen Behaelters sowie des Rotors:

Durchmesser 10 mm; Hoehe 13 mm,

wurden im Laufe von mehrmaligen Durchgaengen die in der nachfolgenden Tabelle angegebenen Werte erhalten:

| | Speisung | | 1.Durchgang | | 2.Durchgang | | 3.Durchgang | | 4.Durchgang | | 5.Durchgang | |
|---|---|---|---|---|---|---|---|---|---|---|---|---|
| | | | Q=326 | t''=18 | Q=163 | t''=36 | Q=109 | t''=54 | Q=82 | t''=72 | Q=65 | t''=90 |
| | Viskosität | Gleit-grenze | Viskosität | Gleit-grenze | Viskosität | Gleit-grenze | Viskosität | Gleit-grenze | Viskosität | Gleit-grenze | Viskosität | Gleit-grenze |
| | mPa.Sek | Pa | mPa.Sek | Pa | mPa.Sek | Pa | mPa.Sek | Pa | mPa.Sek | Pa | mPa.Sek | Pa |
| Milchschokolade Fett% = 30.2 | 5888 | 13.6 | 5300 | 15 | 4624 | 14.4 | 4700* | 13.5* | === | === | === | === |
| Rotorgeschwindigkeit 1770 UPM | | | (-10%) | (+10%) | (-21%) | (+6%) | (-20%) | == | === | === | === | === |
| Milchschokolade Fett% = 30.2 | 5888 | 13.6 | 5386 | 13.6 | 4816* | 13.6* | === | === | === | === | === | === |
| Rotorgeschwindigkeit 2188 UPM | | | (-9%) | == | (-18%) | == | === | === | === | === | === | === |
| Kakaomasse Fett% = 54.4 | 2632 | 2.50 | 2276 | 2.26 | 1945 | 2.45 | 1927 | 2.50 | 1866 | 2.4 | 17 64 | 2.35 |
| Rotorgeschwindigkeit 2188 UPM | | | (-14%) | (-10%) | (-26%) | (-2%) | (-27%) | === | (-29%) | (-4%) | (-33%) | (-6%) |
| Gemenge von Formungs-abfaellen | 6757 | 4.69 | 5990 | 3.78 | 5358 | 4.23 | 5155 | 3.84 | === | === | === | === |
| Rotorgeschwindigkeit 2188 UPM | | | (-11%) | (-19%) | (-21%) | (-10%) | (-24%) | (-18%) | === | === | === | === |

Q = Gleichwertiger Totaldurchsatz in Kg/h

t'' = Gleichwertige Totalverweilzeit in Sekunden

Bemerk.: Die Aenderungsprozente der rheologischen Werte sind auf die urspruenglichen Ausgangswerte bezogen.

* Bei diesen Faellen fuehren weitere Durchgaenge zu keinen bedeutenden Aenderungen.

0 279 255

Bei Erhoehung des Verhaeltnisses zwischen dem Halbmesser des Rotors und dem Halbmesser des mantelartigen Behaelters wird der Behandlungswirkungsgrad verbessert.

Aus dem Obengesagten ist ersichtlich, dass mit der erfindungsgemaessen Vorrichtung zur Herabsetzung der Viskositaet die der vorliegenden Erfindung zugrunde gelegte Aufgabe wirksam geloest wird und die im Einleitungsteil angefuehrten Vorteile erreicht werden.

In der Praxis kann die Messung der aus der erfindungsgemaessen Vorrichtung austretenden Produkte sowohl auf eine direkte Weise, d. h. unter Verwendung eines beliebigen Markt-Viskosimeters als auch auf eine indirekte Weise z. B. unter Verwendung einer Schraube, die von einem unabhaengigen Motor niedriger Leistung gedreht wird, wobei die Stromentnahme gemessen wird. Das so ermittelte Signal kann dazu verwendet werden, die Geschwindigkeit des Rotors (der vorteilhafterweise von einem Gleichstrommotor oder dergleichen gesteuert wird) der erfindungsgemaessen Vorrichtung kontinuierlich zu veraendern, wobei die Geschwindigkeit erhoeht wird, wenn die Viskositaet des austretenden Produktes hoch ist oder herabgesetzt wird, falls die Viskositaet des austretenden Produktes niedrig ist. Falls diese Aenderung ungenuegend sein sollte, und zwar in Abhaengigkeit der Moeglichkeiten der betrachteten Antriebsart, so koennte das gleiche Signal zur Aenderung der Foerderleistung der einen Antrieb mit veraenderbarer Geschwindigkeit aufweisenden Speisepumpe zur Foerderung des Produktes zur erfindungsgemaessen Vorrichtung vorteilhafterwise verwendet werden, so dass bei noch hohen Viskositaetswerten die Zufuehrung des Produktes zur erfindungsgemaessen Vorrichtung herabgesetzt wird, wodurch die Verweilzeit des Produktes im Inneren der vorgeschlagenen Vorrichtung erhoeht wird, und umgekehrt.

Alle die einzelnen Teile der erfindungsgemaessen Vorrichtung koennen durch andere technisch und/oder funktionell gleichwertige Teile ersetzt werden und auch die Anzahl, die geometrische Gestaltung sowie die Anordnung der dargestellten Elemente koennen beliebig gewaehlt werden. Diese Elemente koennen durch ein Gewindeendstueck befestigt werden, das in entsprechenden Gewindesitzen eingeschraubt wird oder durch Schweissen oder dergleichen.

Sollte es erforderlich sein, den Viskositaetswert in hohem Masse herabzusetzen, z. B. wie fuer Versuchszwecke verlangt, so liegt es im Schutzbereich vorliegender Erfindung, eine Anzahl von erfindungsgemaessen Vorrichtungen in Hintereinanderschaltung vorzusehen, welche Vorrichtungen baukastenartig ausgefuehrt sind, so dass jeder moeglichen Erfordernis in bezug auf eine Viskositaetsherabsetzung entsprochen werden kann.

Alle der Beschreibung, den Anspruechen sowie der Zeichnung entnehmbaren Merkmale sind sowohl einzeln als auch in jeder beliebigen Kombination untereinander als erfindungswesentlich zu betrachten.

## Ansprüche

1. Vorrichtung zur Herabsetzung der Viskositaet in Suspensionen von Feststoffen im fetten Traeger, wie Schokoladenmassen und dergleichen, dadurch gekennzeichnet, dass dieselbe

i. einen mantelartigen Behaelter (2), der in seinem Inneren eine Anzahl von untereinander mit einer Teilung (T) entfernt angeordneten und aus Elementen (7) bestehenden Kraenzen, sowie einen Eingangsstuetzen (8) und einen Ausgangsstuetzen (9) fuer das Produkt aufweist,

ii. einen im genannten mantelartigen Behaelter (2) gelagerten Rotor (3), der eine Ahzahl von aus Elementen (6) bestehenden Kraenzen aufweist, wobei die genannten aus den Elementen (6) bestehenden Kraenze untereinander mit der gleichen Teilung (T) der aus den Elementen (7) des mantelartigen Behaelters (2) bestehenden Kraenzen entfernt sind und in bezug auf die genannten aus den Elementen (7) bestehenden Kraenzen des mantelartigen Behaelters (2) alternierend angeordnet sind, wobei dem genannten Rotor (3) Antriebsmittel (16) mit regelbarer Geschwindigkeit zugeordnet sind,

iii. einen zwischen dem mantelartigen Behaelter (2) und einer aeusseren Umhuellung (4) erhaltenen Heizung-Kuehlung-Thermostatisierungszwischenraum (5), der einen Einlaufstutzen (11) und einen Auslaufstutzen (12) fuer eine Heizung-Kuehlung-Thermostatisierungsfluessigkeit besitzt, enthaelt.

2. Vorrichtung zur Herabsetzung der Viskositaet nach Anspruch 1, dadurch gekennzeichnet, dass dieselbe auf ihrer Eingangsseite eine Speisepumpe (15) zur Speisung des Produktes und auf ihrer Ausgangsseite ein Viskosimeter (10) aufweist, so dass eine in einer Herstellungsanlage in Reihe einschaltbare unabhaengige Einheit gebildet wird.

3. Vorrichtung zur Herabsetzung der Viskositaet nach Anspruch 1 und 2, dadurch gekennzeichnet, dass die Schubspannung/Umruehrungselemente (6, 7) einen kreisfoermigen bzw. viereckigen oder andersgestalteten Querschnitt aufweisen und mit dem mantelartigen Behaelter (2) sowie mit dem Rotor (3) durch jeweils einen Gewindezapfen loesbar verbunden sind, der in entsprechenden im genannten mantelartigen Behaelter (2) sowie im genannten Rotor (3) erhaltenen Gewindesitzen einschaltbar ist.

4. Vorrichtung zur Herabsetzung der Viskositaet nach Anspruch 1, dadurch gekennzeichnet, dass die aus Elementen (7) bestehenden Kraenze im mantelartigen Behaelter (2) jeweils aus vier oder mehr untereinander gleichmaessig versetzten Elementen (7) zusammengesetzt sind, wogegen die aus Elementen (6) bestehenden Kraenze auf dem Rotor (3) jeweils aus zwei diametral entgegengesetzten Elementen (6) zusammengesetzt sind.

5. Anlage zur Herstellung von Schokolade, dadurch gekennzeichnet, dass dieselbe in Reihe eine oder mehrere Vorrichtungen zur Herabsetzung der Viskositaet nach einem oder mehreren der vorhergehenden Ansprueche enthaelt.

Fig. 1

Fig. 2

Fig. 3

0 279 255

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 945 066 (WIENER & CO. B.V.) <br> * Ansprüche 1-8 * <br> --- | 1 | A 23 G 1/10 <br> B 01 F 7/04 <br> B 01 F 15/06 |
| A | DD-A- 108 451 (MÜHLE et al.) <br> * Ansprüche 1-6; Figuren 2, 3 * <br> --- | 1 | |
| A | GB-A-2 096 476 (JAPAN SYNTHETIC RUBBER) <br> * Figuren 1, 2 * <br> --- | 1 | |
| A | US-A-4 350 803 (PENN) <br> * Figuren 1, 2 * <br> ----- | 1 | |

RECHERCHIERTE SACHGEBIETE (Int. Cl.4)

A 23 G 1/00
B 01 F 7/00
B 01 F 15/00

Der vorliegende Recherchenbericht wurde für alle Patentansprüche erstellt

| Recherchenort | Abschlußdatum der Recherche | Prüfer |
|---|---|---|
| BERLIN | 18-05-1988 | SCHULTZE D |